(19) Europäisches Patentamt
European Patent Office
Office européen des brevets

(11) Veröffentlichungsnummer: **0 017 061**
**B1**

(12) # EUROPÄISCHE PATENTSCHRIFT

(45) Veröffentlichungstag der Patentschrift: **09.06.82**

(51) Int. Cl.³: **C 08 G 69/00**, D 06 M 15/60, D 21 H 1/38, D 21 H 3/58

(21) Anmeldenummer: **80101377.2**

(22) Anmeldetag: **17.03.80**

(54) **Additionspolymerisate aus Dimorpholonverbindungen und Diaminen, deren Herstellung und deren Verwendung zur Modifizierung von Polymeren sowie für die Textil- oder Papierausrüstung.**

(30) Priorität: **22.03.79 DE 2911263**

(43) Veröffentlichungstag der Anmeldung: **15.10.80 (Patentblatt 80/21)**

(45) Bekanntmachung des Hinweises auf die Patenterteilung: **09.06.82 Patentblatt 82/23**

(84) Benannte Vertragsstaaten: **BE DE FR GB**

(56) Entgegenhaltungen:
**AT B 290 979**
**CH A 563 418**
**DE B 2 230 627**
**US A 3 526 608**

(73) Patentinhaber: **BASF Aktiengesellschaft**
**Carl-Bosch-Strasse 38**
**D-6700 Ludwigshafen (DE)**

(72) Erfinder: **Degen, Hans-Juergen, Dr.**
**Schillerstrasse 6**
**D-6143 Lorsch (DE)**
Erfinder: **Naarmann, Herbert, Dr.**
**Haardtblick 15**
**D-6719 Wattenheim (DE)**

**EP 0 017 061 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 18, rue St-Denis, 75001 Paris, France

Additionspolymerisate aus Dimorpholonverbindungen und Diaminen, deren Herstellung und deren Verwendung zur Modifizierung von Polymeren sowie für die Textil- oder Papierausrüstung

Die Erfindung betrifft neue Polymerisate mit K-Werten von 20 bis 65, deren Herstellung sowie deren Verwendung zur Modifizierung von Polymeren und für die Textil- oder Papierausrüstung.

Der Erfindung lag die Aufgabe zugrunde, Polymerisate zu schaffen, die aus Hydroxyäthylgruppen enthaltenden Carbamideinheiten bestehen.

Die Aufgabe wurde gelöst durch Polymerisate mit K-Werten von 20 bis 65, die aus Strukturelemente der allgemeinen Formel (I)

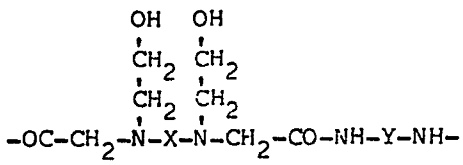

(I)

bestehen, worin X und Y gleich oder verschieden sind und stehen für die Gruppen : $-(CH_2-CH_2)_n-$, wobei n = 1 bis 6 sein kann,

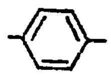 , 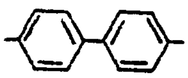 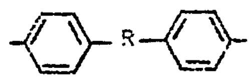 ,

wobei R = O, S, $SO_2$, $C(CH_3)_2$ oder $CH_2$ sein kann,

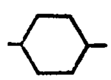 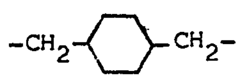 oder 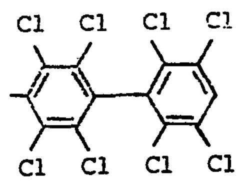

Eine weitere Aufgabe der Erfindung war es, die obengenannten Polymerisate herzustellen.

Diese Aufgabe wurde gelöst durch ein Verfahren, bei dem Dimorpholonverbindungen der allgemeinen Formel (II)

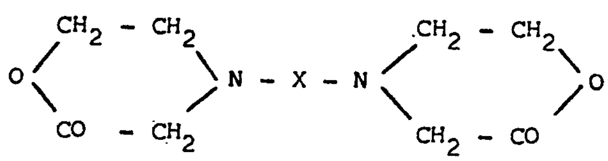

(II)

worin X steht für die oben angebenen Gruppen, mit Diaminen der allgemeinen Formel (III)

$$H_2N-Y-NH_2, \qquad (III)$$

worin Y gleich oder verschieden zu X ist und steht für die oben angegebenen Gruppen, im Molverhältnis 1 : 1 bei Temperaturen von 40 bis 300 °C, ggf. in Gegenwart von Lösungsmitteln zusammengibt.

Unter Polymerisaten mit K-Werten von 20 bis 65, die Struktureinheiten der allgemeinen Formel (I) enthalten, werden Homopolymerisate mit wiederkehrenden Einheiten der allgemeinen Formel (I) verstanden, wobei der K-Wert die technische Kenngröße zur Charakterisierung des Polymerisationsgrades ist und gemessen wird nach H. Fikentscher, Cellulosechemie *13* (1932) 58-64 und 71-74, eingewichtsprozentig in Dimethylformamid bei einer Temperatur von 25 °C ; dabei bedeutet $K = k \cdot 10^3$. Bevorzugte Polymerisate sind solche mit K-Werten von 22 bis 45. Die erfindungsgemäßen Polymerisate enthalten die Strukturelemente (I) n mal, wobei n eine ganze zwischen 5 und 1 000, vorzugsweise zwischen 20 und 250 ist.

Die neuen Polymerisate werden hergestellt durch Zusammengeben der Dimorpholonverbindungen (II) mit den Diaminen der allgemeinen Formel (III) im Molverhältnis 1 : 1 bei Temperaturen zwischen 40 bis 300, vorzugsweise zwischen 90 und 250 °C. Die Reaktion kann bei Normaldruck und auch bei erhöhtem Druck erfolgen. Arbeitet man bei erhöhtem Druck, so wird die Reaktion vorzugsweise bei einem Druck bis 20 bar durchgeführt. Ggf. kann die Reaktion auch in Gegenwart von Hilfsflüssigkeiten wie Dioxan, Dimethylformamid, N-Methylolpyrrolidon oder auch Lösungsmittelgemischen ausgeführt werden. Die Dimorpholonverbindungen (II) können nach dem von A.R. Surrey et al im Journal of the American

Chemical Society *77* (1955) Seiten 633 bis 636 beschriebenen Verfahren synthetisiert werden.

Die nach dem erfindungsgemäßen Verfahren erhaltenen neuen Polymerisate sind zur antistatischen Ausrüstung, zur Modifizierung von Kunststoffen sowie als Abmischkomponenten für die Textil- und/oder Papierausrüstung geeignet.

## Beispiel 1

In einem Reaktionskolben werden 288 Gew.-Teile des Dimorpholons

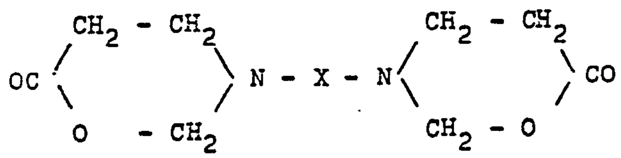

(X=$CH_2$-$CH_2$)

mit 60 Gew.-Teilen des Diamin $H_2N—Y—NH_2$ (Y = $CH_2—CH_2$) in Gegenwart von 400 Gew.-Teilen N-Dimethylformamid 5 Stunden auf 120 °C erhitzt, und anschließend bei 100 °C und 3 Torr das Lösungsmittel abgezogen. Es verbleiben 280 Gew.-Teile eines hellbraunen Rückstandes, der einen K-Wert von 25 aufweist.

## Beispiele 2 bis 8

Entsprechend Beispiel 1 erfolgt die Umsetzung der Dimorpholone mit dem jeweiligen Diamin. In der nachfolgenden Tabelle sind die Ergebnisse zusammengefaßt.

(Siehe die Tabelle, S. 4 und 5)

Tabelle

| Beispiel Nummer | Einsatzstoffe (II)<br>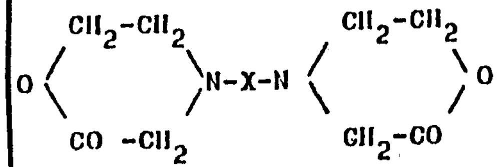<br>X | Gew.-Teile | Einsatzstoffe (III)<br>$H_2N - Y - NH_2$<br>Y | Gew.-Teile | Ausbeute (I) (Gew.-Teile) | K-Wert |
|---|---|---|---|---|---|---|
| 2 | $(CH_2)_4$ | 256 | $(CH_2)_4$ | 88 | 340 | 34 |
| 3 | $(CH_2)_6$ | 284 | $(CH_2)_6$ | 116 | 390 | 36 |
| 4 | 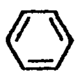 | 276 | 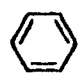 | 108 | 375 | 38 |
| 5 | 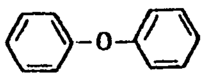 | 368 | 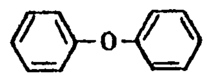 | 200 | 560 | 29 |
| 6 | 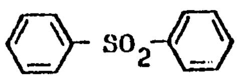 | 416 | 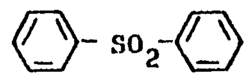 | 248 | 655 | 32 |
| 7 | 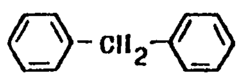 | 366 | 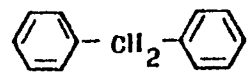 | 198 | 650 | 44 |
| 8 | 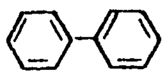 | 352 | 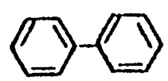 | 184 | 530 | 45 |
| 9 | 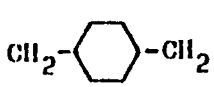 | 310 | 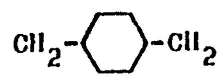 | 140 | 440 | 34 |

Tabelle (Fortsetzung)

| Beispiel Nummer | Einsatzstoffe (II) 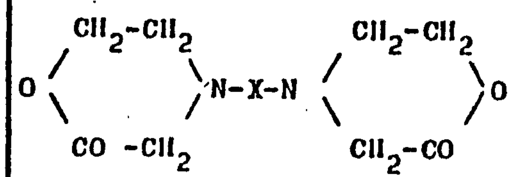 X | Gew.-Teile | Einsatzstoffe (III) $H_2N - Y - NH_2$ Y | Gew.-Teile | Ausbeute (I) (Gew.-Teile) | K-Wert |
|---|---|---|---|---|---|---|
| 10 | 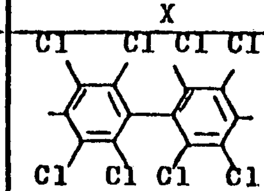 | 628 | $(CH_2)_2$ | 60 | 675 | 22 |
| 11 | 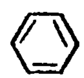 | 276 | $(CH_2)_2$ | 60 | 330 | 29 |
| 12 | 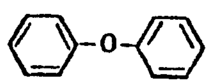 | 368 | $(CH_2)_2$ | 60 | 425 | 32 |
| 13 | $(CH_2)_4$ | 256 | 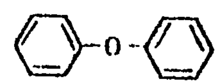 | 200 | 450 | 34 |
| 14 | $(CH_2)_4$ | 256 | $CH_2$- H -$CH_2$ | 140 | 390 | 36 |

**Ansprüche**

1. Polymerisate mit K-Werten von 20 bis 65, die aus Strukturelemente der allgemeinen Formel (I)

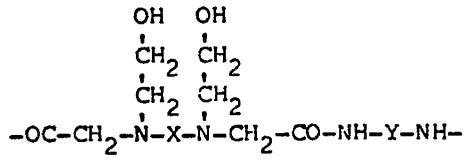

(I)

bestehen, worin X und Y gleich oder verschieden sind und stehen für die Gruppen : $-(CH_2-CH_2)_n-$, wobei n = 1 bis 6 sein kann,

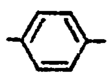

,

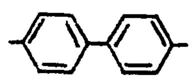

ou

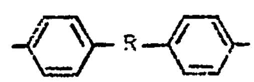

,

wobei R = O, S, $SO_2$, $C(CH_3)_2$ oder $CH_2$ sein kann,

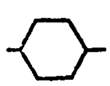

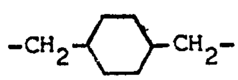

oder

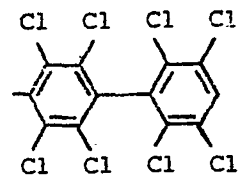

.

2. Verfahren zur Herstellung der Polymerisate nach Anspruch 1, dadurch gekennzeichnet, daß man Dimorpholonverbindungen der allgemeinen Formel (II)

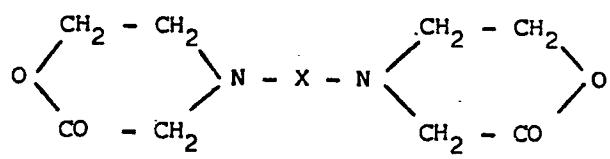

(II)

worin X steht für die oben angegebenen Gruppen, mit Diaminen der allgemeinen Formel (III)

$$H_2N-Y-NH_2 \qquad \text{(III)}$$

worin Y gleich oder verschieden zu X ist und steht für die oben angegebenen Gruppen, im Molverhältnis 1 : 1 bei Temperaturen von 40 bis 300 °C, ggf. in Gegenwart von Lösungsmitteln, zusammengibt.

3. Verwendung der Polymerisate nach Anspruch 1, zur Modifizierung von Kunststoffen sowie für die Textil- oder Papierausrüstung.

**Claims**

1. A polymer with a K value of from 20 to 65, which consists of structural units of the general formula

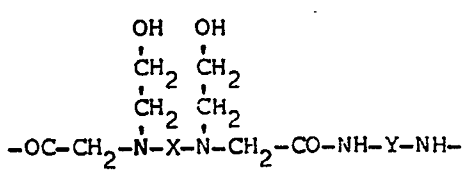

(I)

where X and Y are identical or different and are $-(CH_2-CH_2)_n-$, where n is from 1 to 6, or are

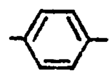 , 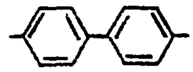 or 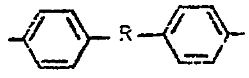 ,

where R is O, S, $SO_2$, $C(CH_3)_2$ or $CH_2$, or are

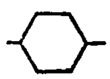 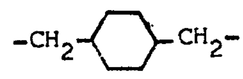 or 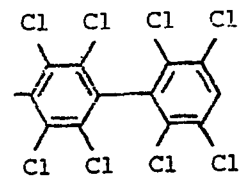 .

2. A process for the preparation of a polymer as claimed in claim 1, characterized in that a dimorpholone compound of the general formula (II)

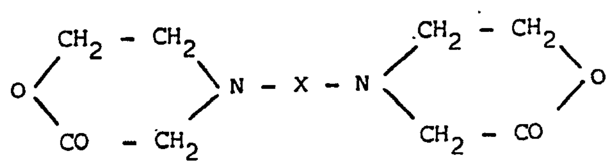 (II)

where X is one of the above groups, is reacted with a diamine of the general formula (III)

$$H_2N—Y—NH_2 \qquad (III)$$

where Y may be identical with or different from X and is one of the above groups, in a molar ratio of 1 : 1, at from 40° to 300 °C, in the presence or absence of a solvent.

3. Use of a polymer as claimed in claim 1 for modifying plastics, and for textile or paper finishing.

**Revendications**

1. Polymères présentant des valeurs K de 20 à 65, consistant en éléments de structure de formule générale I

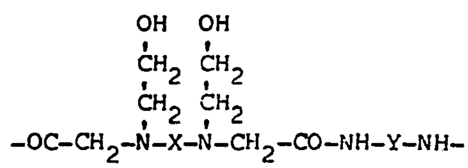 (I)

dans laquelle X et Y, identiques ou différents, représentent les groupes $—(CH_2—CH_2)_n—$ dans lesquels n peut prendre une valeur de 1 à 6,

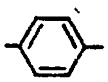 , 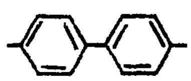 ou 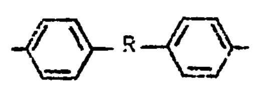 ,

R pouvant représenter O, S, $SO_2$, $C(CH_3)_2$ ou $CH_2$,

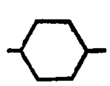 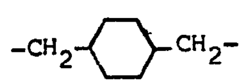 ou 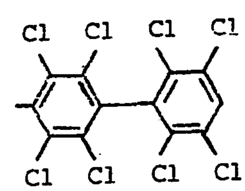 .

2. Procédé de préparation des polymères selon la revendication 1, caractérisé en ce que l'on met en contact des dérivés de dimorpholones de formule générale II

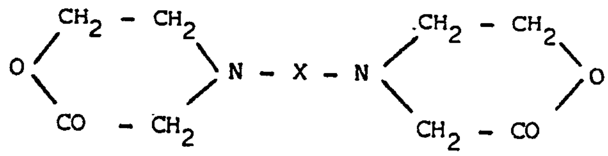

(II)

dans laquelle X représente les groupes indiqués ci-dessus, avec des diamines de formule générale III

$$H_2N—Y—NH_2 \qquad (III)$$

dans laquelle Y, identique à X ou différent de X, représente les groupes indiqués ci-dessus, dans un rapport molaire de 1 : 1, à des températures de 40 à 300 °C, éventuellement en présence de solvants.

3. Utilisation des polymères selon la revendication 1 pour la modification de résines synthétiques et pour l'apprêtage des textiles ou du papier.